# EUROPEAN PATENT APPLICATION

(11) **EP 3 115 199 A1**
(43) Date of publication of application: **11.01.2017**
(21) Application number: 15176309.1
(22) Date of filing: 10.07.2015
(51) Int. Cl.: B32B 18/00, C04B 35/80, F01D 5/18, F01D 5/28

(54) **MANUFACTURING OF SINGLE OR MULTIPLE PANELS**

(71) Applicant: General Electric Technology GmbH, 5400 Baden (CH)
(72) Inventor: Grasso, Piero-Daniele, 8166 Niederweningen (CH); Stankowski, Alexander, 5303 Würenlingen (CH); Puidokas, Sabrina, 5408 Ennetbaden (CH)
(74) Representative: Bernotti, Andrea

(57) **Abstract**

The invention is referring to a method of manufacturing an isolation panel, which is manufactured by the following operations:
Cutting of a desized 2D ceramic tissue in the right size and shape for the application;
Slurry infiltration in the tissue by, e.g., knife blade coating;
Laminating on mould of a single layer or of a multi-layer according panel;
Laminating on top of multi-layer according to the system 1 (i.e., panel 1) of a single layer or of a multi-layer, according to the system 3 (i.e. panel 3);
Drying;
De-moulding;
Sintering the whole structure in one or more steps in order to finalise the component specific areas or component module;
Finishing, namely using i) post-machine, and/or ii) surface smoothening/rework, and/or iii) coating application, and/or other procedures, if needed.

## Description

### Technical Field

The present invention relates to advanced concepts for modular Industrial Gas Turbine (IGT) components, which are based on the principle of using best suited materials for individual sections in every area of IGT components according to the state of the art. It refers to methods for manufacturing of isolation structures resp. panels, cooling structures resp. panels for applying on a component to adapt the final component to a specific function according to one of the independent claims.

Furthermore the present invention relates to i) combined panel structures: ii) special treatment of the various panels which form the combined panel structure; iii) manufacturing concept referring to a structured cooling panel; iv) various IGT components which are assembled by the combined panel structures.

### Background of the invention

The selection of most adequate material is driven by environmental, thermal, mechanical and thermo-mechanical load conditions under service exposure. According to this design concept, monolithic ceramic and ceramic matrix composite (CMC) materials are especially beneficial to be applied in high temperature loaded areas, whereas metal alloys are preferentially used mainly in mechanically or moderate thermo-mechanically loaded sections. This principle implicates the utilization of monolithic ceramics and especially CMCs for the generation of gas turbine (GT) components or component modules/specific areas in the Turbine & Combustor GT section such as platforms and airfoils, inserts or more generally as liner material.

The approach is also an extension of the new reconditioning/repair concept referring to WO 2014/146829 A1, adapted to higher temperatures (T) applications. As a matter of fact, monolithic ceramic materials and ceramic matrix composites are less prone to thermal degradation effects when exposed to high and very high temperatures (1000-1700°) and cyclic operation regimes. Compared to the use of metallic alloys, which must be protected by an environmental metallic coating combined with a thermal barrier coating (i.e., TBC system), a considerably longer overall component lifetime is enabled.

Ceramic systems (incl. CMCs) might also need environmental and thermal barrier protection coatings made of ceramics, especially in the higher temperature range, but thus allowing operation at temperature levels that metallic alloys cannot sustain or considerably increasing the component lifetime.

Based on this concept, there are mainly two factors, driving the development of monolithic and ceramic composite made bodies for the Turbine Blading and Combustor sections of land based IGT and however this is also valid, at least in part, for the aero GTs:
1. Component T resistance and increased lifetime.
2. The cooling requirements for the front stages of turbine blading can be substantially reduced by providing the blading (rotating and/or stationary) with a ceramic shell as a protective barrier against the impact of the hot gas during operation.

Typical drawbacks of today's standard monolithic ceramic and CMC systems in modular IGT component designs are:
i. Brittle behaviour and low fracture toughness (monolithic ceramic).
ii. Very limited fatigue behaviour, especially monolithic ceramic, but also CMC systems.
iii. Limit creep resistance (CMC).
iv. Cost intensive (CMC).

Commercially available, as well as in literature described CMC material still suffers from:
Mechanical strength values of CMCs which are generally at the limit of the design requirements, when considering turbine parts and especially in case of rotating blading (creep loading). Considering a simple functional split (i.e., mechanical and thermal decoupling) of the different component sections, such as, splitting the component into different subcomponents, where certain areas have mainly to sustain the mechanical load and other component sections will have to resist to a high thermal loading (as mentioned in several patents and open literature) is not sufficient. Some specific areas of the shell will still be submitted to very high temperatures and to non-negligible mechanical loading from the very high gas mass flow, gas pressure and centrifugal load.

Strong anisotropic mechanical and physical CMC material properties. This phenomenon is based on the intrinsic 2D/3D woven microstructure of inorganic fibres within the CMC composite. Especially in the case of a need for thicker material strengths, multiple layer arrangements are unavoidable, additionally increasing the intrinsic inhomogeneity and leading to the risk of local defects or complete delamination in between the individual stacked layers. Additionally to this aspect, the overall risk of increasing porosity raises with the number of layers, which are used to form the final shell or liner section.

Limited creep behaviour, which is mainly driven by the fibre properties contained as reinforcement elements within the CMC microstructure. This peculiarity of ceramic composite material limits even further the design flexibility and subsequent application in areas of combined mechanical and high temperature loading over long operation times.

High thermal gradients (temperature inhomogeneity) around the airfoil are to be expected. Out to the fact that the resulting maximum thermal and mechanical loading can be very localized, this bears a high risk of local damage formation, which might ultimately lead to a complete failure of the CMC system

### Summary of invention

It is an object of the present invention to summarize the limits and shortcomings of today's monolithic ceramic and CMC sections for IGT components, as well as the correlated modular component design scenarios. For this purpose, the following critical aspects have to be overcome:
i. Distinct anisotropy of the mechanical properties of CMC material.
ii. Mechanical, thermal and thermo-mechanical limits of standard monolithic and CMC material.
iii. Limits of erosion for the CMC material.
iv. Impact resistance of standard monolithic and CMC material.
v. Limits of high temperature chemical stability (ceramic corrosion) and oxidation for non-oxide ceramics leading to matrix & fibres properties degradation.
vi. High cost of individual CMC sections (e.g., airfoil shells, liners, and other components).

The inventive object is obtained by an embodiment according to at least one of the independent claims.

### Definitions:

A panel consists of a single or multi-plies (= multi-layered) structure of tissue fibres with a defined arrangement. Each layer of a multi-plies structure can be made of a different fibre arrangement, orientation, architecture or geometric consistency, for example size.

### A distinction is imposing:

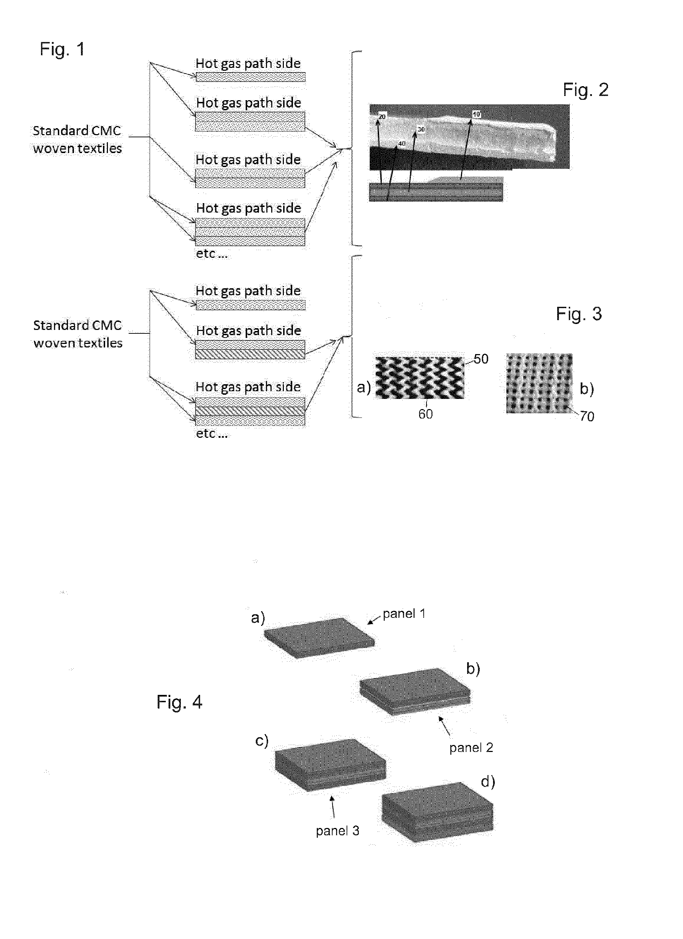

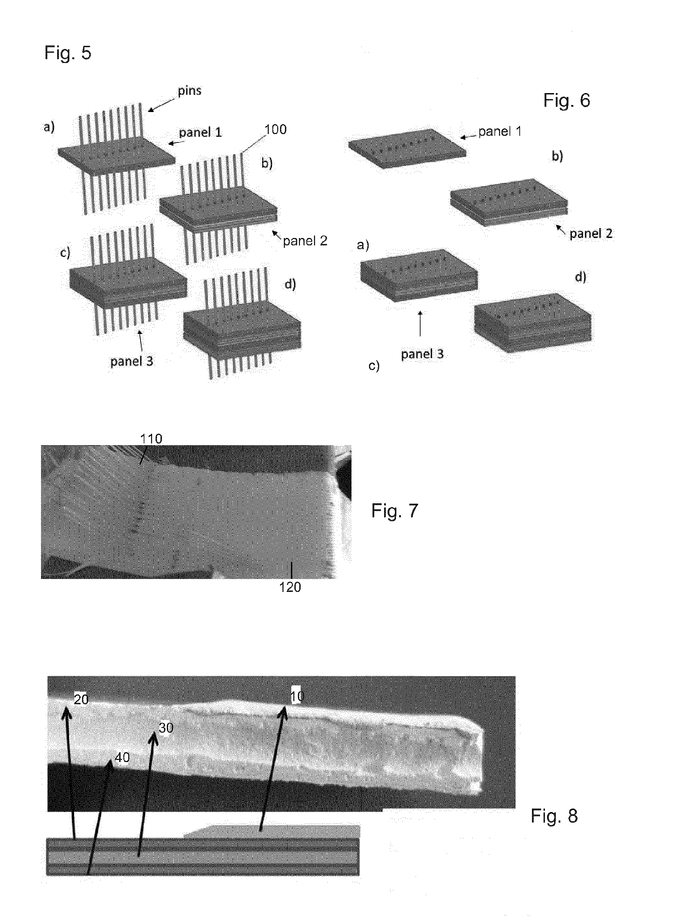

1. Standard CMC panel using standard arranged and/or woven fibres tissues. Different layers in a multi-layered panel, which do not necessarily have the same fibre orientation or weaving structure (system 1, panel 1, see Figure 1)
2. "Cooling pattern" CMC panel, using combined fibres structures (system 2, panel 2, see Figures 1 and 3a) or using tissues with pre-build cooling holes (system 2, panel 2). This panel comprises a cooling structure which can consist of different performances (see Figures 3a, 3b, 5b, 11a, 11b).
3. "Isolation CMC panel", consisting of a body with at least the following parts, arranged from top to bottom:
   - Coating, if necessary;
   - CMC (one or more plies);
   - Ceramic felt (impregnated or non-impregnated with ceramic slurry matrix system) (one or more plies);
   - CMC (one or more plies).
   Depending on the needs, a coating can be added by various different processes (thermal spraying, dipping, CVD, etc.) on top of the internal or external surface of the panel (system 3, panel 3, see for example Figures 5c).
   Depending on the needs, the arrangement can be (see Figures 1 and 4):
   i) With isolation panel (panel 3) as external panel on top of standard CMC panel (panel 1)
   ii) With isolation panel (panel 3) as central part of a sandwich, i.e., with standard CMC panels (panel 1) as external and internal panels.
   iii) Etc...
4. Other combinations can be realised depending on the specific application. The layer-up order of the panels can also be different. The combined structure panels used can be combinations of the different panel systems presented above, namely:
   i) Panel 1: CMC, coating , if necessary;
   ii) Panel 2: Cooling pattern CMC;
   iii) Panel 3: Isolation panel, ceramic felt.
   The panels, as single panel or as combined structure panels, can be of complex 3D geometries such a gas turbine blade or vane airfoil.
5. Additionally, implementation of cooling air holes (CAH) using insertion of pins in-between the ceramic tissue fibres bundles avoiding to break/damage of fibres.
   In this case, no need of a complex post processing (such a laser drilling or other machining operations). This can be done in a state of the art CMC panel or in different panel systems and combination thereof.
6. The integration of cooling holes during the manufacturing by using pins. In that manner, the fibres are not getting cut and the integrity of the CMC layers remains unaltered

Moreover, the term (expression) "ceramic textile" is a synonym to "tissue"; the more generic "ceramic fabric" could be used here. The subsequent use of the various terms should be viewed in this context.

The manufacturing steps are using the standard CMC multi-plies production process, in which are integrated some steps or special tissues or items in order to obtain the targeted features.

The advantage of the method is the generation of complex panels (for adaptation of the final product to a specific function) with multiple systems configuration using one single drying and one single sintering step and minimizing (or completely eliminating) the rework steps such as post-machining, surface rework or coating application. The following methods are preferably used as a basis:

Manufacturing concept referring to isolation structures/panels comprising the following operations a)-h):
a) Cutting of a desized 2D ceramic tissue in the right size and shape for the application. Desizing means a process to remove the fibres coating used for manufacturing of the ceramic tissues.
b) Slurry infiltration in the tissue by, preferably by knife blade coating (this level open also other slurry infiltration methods)
c) Laminating on mould of a single layer or of a multi-layer according to the panel:

This method operation comprising at least three steps, namely
i) an application of one to n-layers of standard ceramic tissue (with arranged fibres, e.g., un-directionally arranged (UD), or woven fibres); and ii) different layers in the multi-layered panel do not have necessarily to have the same fibre orientation or weaving architecture, and
iii) slurry infiltration in the tissue by, e.g., knife blade coating, after each single layer.
The three mentioned steps do not necessarily take place in common.
d) Laminating on top of multi-layer according to the system 1 (i.e., panel 1) of a single layer or of a multi-layer, according to the system 3 (i.e. panel 3):

This method operation comprising at least two steps, namely
i) an application of one to n-layers of ceramic felt, and
ii) a slurry infiltration in the tissue (only partial: only outer surfaces of the tissue in order to bind it to the CMC multiplies panels, or fully impregnated) by, e.g., knife blade coating, after each single layer.

The two mentioned steps do not necessarily take place in common.
e) Optional: Pins application (concept with inserted pins) in order to generate straight cooling paths through a part of the thickness or through the full thickness of the multiple panel structure (i.e., cooling air holes, CAH):

This method operation comprising at least three steps, namely pins can be
i) permanent metallic pins with a ceramic layer coating to avoid attachment of matrix to the pin and too strong oxidation of the pin during sintering; and
ii) permanent ceramic pins that can be easily removed after sintering; and
iii) pin that will be eliminated during the sintering process via the heat treatment (e.g., carbon pins) leaving the holes structure intact.

Additionally, pins are applied by sliding them through a part of thickness or through the whole thickness of the multiple panel structure. In the latter case, in order to facilitate the positioning of the pins, the mould underneath can be provided with positioning hole in which the pins are fit into with the appropriated position and angle. The pins are inserted in-between the tissue fibre bundles in order to avoid any damages of the ceramic fibres during the processing and later removal of the pins. All mentioned steps do not necessarily take place in common.
e) Drying.
f) De-moulding.
g) Sintering the whole structure in one step in order to finalise the component specific areas or component module.
h) Only in case of optional operation e) is made: Remove pins avoiding to damage the fibre bundle surrounding them. Removal technique will depend on the type of pins used [see various steps under e)]. i) Finishing, namely using of i) post-machine, and/or ii) surface smoothening/rework, and/or iii) coating application, and/or other procedures, if necessary.

Elucidating: The knife blade coating is the one used method. This is effectively making more sense to keep infiltration method as general step and mention knife blade coating as an example. Other methods are, e.g., pressure infiltration, pre-processing, electrophoretic deposition, etc.

The initial system applied on the mould must not be mandatorily the system 1. But can also be system 2 or 3 as described in various figures, where the various combinations are described and will depend on the final application or feature targeted.

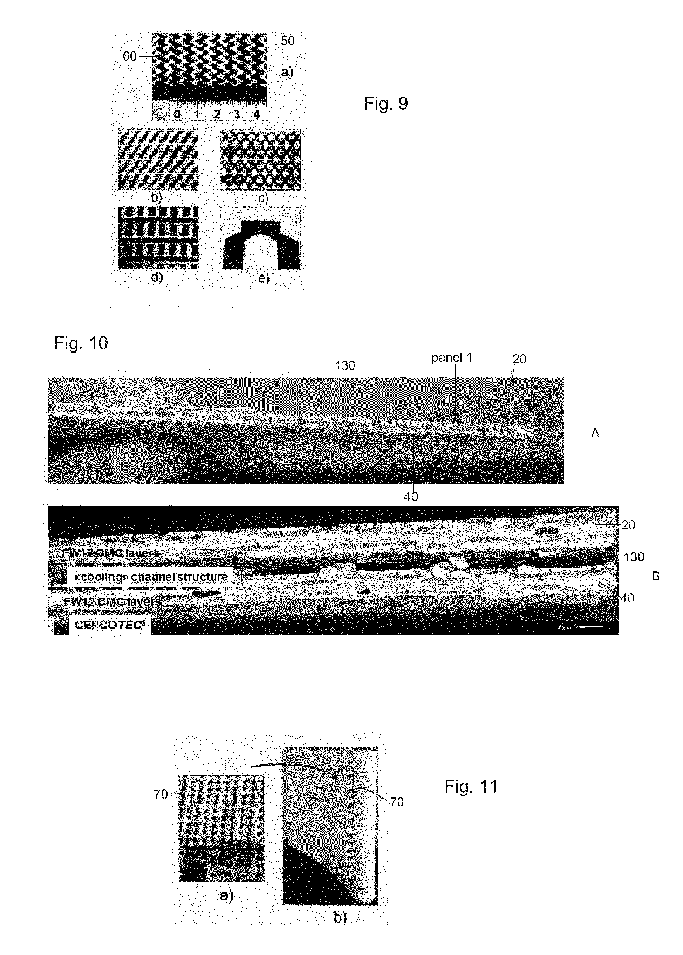

Manufacturing concept referring to cooling structures/panels (Figure 3a) and 3b) and Figure 9, 10 and 11).

Manufacturing concept using tissue with combined fibres architectures (Figures 3a, and 9 and 10) comprising the following operations a)-j):
a) Cutting of a desized 2D ceramic tissue in the right size and shape for the application. Desizing in this context means a process to remove the fibres coating used for manufacturing of the ceramic tissues.
b) Slurry infiltration in the tissue by, e.g., knife blade coating.
c) Laminating on mould of a single layer or of a multi-layer according to system 2 (i.e., panel 2): This method operation comprising at least three steps, namely
   i) an application of one to n-layers of combined fibre architecture ceramic tissue (see Figure 3 a) and Figure 9); and
   ii) different layers in the multi-layered panel do not have necessarily to have the same cooling path architecture; and
   iii) slurry infiltration in the tissue by, e.g., knife blade coating, after each single layer.

The three mentioned steps do not necessarily take place in common.
d) Laminating on top of multi-layer system 2 (i.e., panel 1) a single layer or of a multi-layer according to system 1 (i.e., panel 1): This method operation comprising at least three steps, namely
   i) an application of one to n-layers of standard ceramic tissue (with arranged fibres, e.g., un-directionally arranged (UD), or woven fibres); and ii) different layers in the multi-layered panel do not have necessarily to have the same fibre orientation or weaving architecture; and
   iii) slurry infiltration in the tissue by, e.g., knife blade coating, after each single layer.
The three mentioned steps do not necessarily take place in common.
e) Optional: Pins application (see Figure 5) in order to generate straight cooling paths through a part of the thickness or through the full thickness of the multiple panel structure (i.e., cooling air holes, CAH): Pins can be:
   i) metallic pins with a ceramic layer on top to avoid attachment of matrix to the pin and too strong oxidation of the pin during sintering;
   ii) permanent ceramic pins, that can be easily removed after sintering;
   iii) pin that will be eliminated during the sintering process via the heat treatment (e.g., carbon pins) leaving the holes structure intact.

Additionally, pins are applied by sliding them through a part of thickness or through the whole thickness of the multiple panel structure. In the latter case, in order to facilitate the positioning of the pins, the mould underneath can be provided with positioning hole in which the pins are fit into with the appropriated position and angle. All mentioned steps do not necessarily take place in common. The pins are inserted in-between the tissue fibre bundles in order to avoid any damages of the ceramic fibres during the processing and later removal of the pins.
f) Drying.
g) De-moulding.
h) Sintering the whole structure in one or more steps step in order to finalise the component specific areas or component module: During the sintering process, the "sacrificial" fibres (i.e., black fibres depicted in Figures 3 a) and Figure 9 will burn out during the sintering process leaving a negative architecture forming the cooling structure.
i) Only in case of optional operation 5 is made: Remove pins avoiding to damage the fibre bundle surrounding them. Removal technique will depend on the type of pins used (see various steps under e).
j) Finishing, namely using of i) post-machine, and/or ii) surface smoothening/rework, and/or iii) coating application, and/or other procedures.

The initial system applied on the mould must not be mandatorily the system 2. But can also be system 1 or 3 as described in various figures, where the various combinations are described and will depend on the final application or feature targeted.

Manufacturing concept using tissues with combined fibres architectures comprising the following operations a)-j): (Figures 3b, 11)
a) Cutting of a desized 2D ceramic tissue in the right size and shape for the application. Desizing in this context means a process to remove the fibres coating used for manufacturing of the ceramic tissues.
b) Slurry infiltration in the tissue by, e.g., knife blade coating.
c) Laminating on mould of a single layer or of a multi-layer according to system 2 (i.e., panel 2), comprising at least the followings steps:
   i) an application of one to n-layers of woven tissues with integrated cooling holes structure (see Figures 3 b); 6; 10);
   ii) slurry infiltration in the tissue by, e.g., knife blade coating, after each single layer.

All mentioned steps do not necessarily take place in common.
d) Optional: Laminating on top of multi-layer according to system 2 (i.e., panel 1 and/or 2) a single layer or of a multi-layer according to system 1 (i.e., panel 1) to construct an emergency cooling air holes system. If the system 1 gets damaged, the underneath cooling structure formed using the system 2 will enable an emergency cooling of the damaged area. This method operation comprising at least three steps:
   i) an application of one to n-layers of standard ceramic tissue (with arranged fibres, e.g., un-directionally arranged (UD), or woven fibres);
   ii) different layers in the multi-layered panel do not have necessarily to have the same fibre orientation or weaving architecture;
   iii) slurry infiltration in the tissue by, e.g., knife blade coating, after each single layer. All mentioned steps do not necessarily take place in common;
e) optional for areas, where cooling is needed from the start of operation. Pins application (see Figures 3 b); 6; 7; 10) in order to generate straight cooling paths through a part of the thickness or through the full thickness of the multiple panel structure (i.e., cooling air holes, CAH): Pins can be:
   i) metallic pins with a ceramic layer on top to avoid attachment of matrix to the pin and too strong oxidation of the pin during sintering;
   ii) permanent ceramic pins, that can be easily removed after sintering; iii) pin that will be eliminated during the sintering process via the heat treatment (e.g., carbon pins) leaving the holes structure intact. Pins are applied by sliding them through a part of thickness or through the whole thickness of the multiple panel structure. In the latter case, in order to facilitate the positioning of the pins, the mould underneath can be provided with positioning hole in which the pins are fit into with the appropriated position and angle. Additionally, the pins are inserted in-between the tissue fibre bundles in order to avoid any damages of the ceramic fibres during the processing and later removal of the pins.
   f) Drying.
   g) De-moulding.
   h) Sintering the whole structure in one step in order to finalise the component specific areas or component module, namely: During the sintering process, the "sacrificial" fibres (i.e., black fibres depicted in Figures 3 b) and 9) will burn out during the sintering process leaving a negative architecture forming the cooling structure.
   i) Only in case of optional procedure according to lit. e): Remove pins avoiding to damage the fibre bundle surrounding them. Accordingly, removal technique will depend on the type of pins used (see procedure e).
   j) Finishing, namely using of i) post-machine, and/or ii) surface smoothening/rework, and/or iii) coating application, and/or other procedures, if needed.

The initial system applied on the mould must not be mandatorily the system 2. But can also be system 1 or 3 as described in various figures, where the various combinations are described and will depend on the final application or feature targeted.

Referring to intermediate lawyer the following aspects should be highlighted: In this case two main functions of the intermediate layer are significant:
a) Working as a "bumper", it supports the standard CMC or multiple panel CMC structure in order to minimize the bending forces acting on it. These bending forces can be generated by the stresses induced due to thermal gradients in the structure or from operation transients (e.g., engine starts and stops), or by impacting objects.
b) Working as "compensator/regulator" for the CTE (Coefficient of Thermal Expansion) mismatch between the CMC structure and the underneath metallic structure, limiting in that way the building up of very high stresses in the CMC structure.

In this context, reference to the prior art is made, namely referring to DE 10 2013 110381 A1 and US 8 267 659 B2, where the features (that could correspond to an intermediate layer) are used as spacers between the support structure (e.g., metallic airfoil core) and the CMC shell.

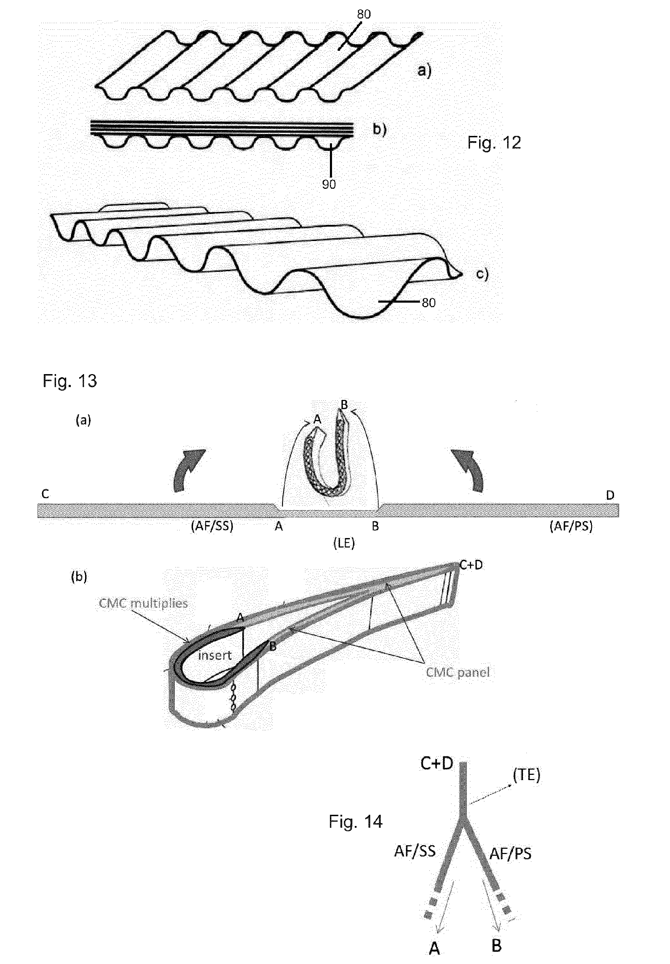

Manufacturing concept referring to an intermediate layer comprising the following operations a)-k):
a) Cutting of a desized 2D ceramic tissue in the right size and shape for the application. Desizing in this context means a process to remove the fibres coating used for manufacturing of the ceramic tissues.
b) Slurry infiltration in the tissue by, e.g., knife blade coating.
c) Laminating on mould of a single layer or of a multi-layer system 1, 2 or 3.
d) Laminating on top of system 1, 2 or 3 a single layer or of a multi-layer system 1, 2 or 3.
e) Repeating operations c) and d) until the targeted CMC structure is reached.
f) Drying.
g) De-moulding.
h) Combining an "undulated" structure made of CMC (see Figure 12) to the multiple panel structure obtained from operations a) to e).
   a. The "undulated" structure is manufactured separately using the same manufacturing route as the standard CMC tissues and an appropriated mould including the drying and de-moulding steps.
   b. The structure is slipped in the internal cavity of the multiple panel structure obtained from operations a) to e).
   c. Both structures can be glued using the same ceramic slurry used for the infiltration of the ceramic tissues, or only punctually bound in order to allow a larger lateral movement/expansion of the "undulated" structure.
   d. The binding between both structures can also be made by a different joining method, such as a ceramic glue or a brazing technique using metallised surfaces on both ceramic structures.
i) Drying if operation h) c. is carried out.
j) Sintering the whole structure in one step in order to finalise the component specific areas or component module.
k) Finishing, namely using of i) post-machine, and/or ii) surface smoothening/rework, and/or iii) coating application, and/or other procedures.

Cooling air holes generation using pins can be added to the above manufacturing sequence if needed.

Flexible Manufacturing concept with reinforcement inserts and insert integration:

The insert can be an airfoil Leading Edge (LE) area, or a Trailing Edge (TE) area, or other area, including platforms that are strongly solicited from a thermal and mechanical loading point of view.

Pre-impregnated CMC panels (AF/SS & AF/PS = see Figures 13, 14) with the correct 3D airfoil shape with a middle area of non-impregnated tissue (LE) are enveloped around the insert at the LE area and connected at the points C and D (Trailing Edge, TE) (see Figure 13a) by a joining method which can include the addition of a specially prepared tissue to ensure efficient joining of the 2 panels (e.g., interwoven TE tissue to avoid relying on a pure gluing method) (see Figure 14).

Together with an impregnation a slurry infiltration by various methods (for example combing method) can also be applied.

The final part with insert at the LE and bound area at C+D points is shown in Figure 13b): The mentioned LE insert is an example and it is important to mention that inserts can also be used at TE or other specific areas of the airfoil depending on the component specific thermo-mechanical load. Such a concept can also be used in the case of blades and vanes platform sections or liner components (in the Turbine or in the Combustor Gas Turbine sections).

The following operations are made a)-m):
a) Cutting of a desized 2D ceramic tissue in the right size and shape for the application. Desizing in this context means a process to remove the fibres coating used for manufacturing of the ceramic tissues.
b) Slurry infiltration in the tissue by, e.g., knife blade coating in the areas A to C and B to D.
c) Laminating on mould of a multi-layer system 1, 2 or 3, wherein LE (Leading edge) area, within the meaning of the above specification, remains thinner taking into account the thickness of the insert.
d) Optional: Laminating on top of system 1, 2 or 3 a single layer or of a multi-layer system 1, 2 or 3 in the areas A to C and B to D.
e) Repeating operations c) and d) until the targeted CMC structure is reached.
f) Drying.
g) De-moulding.
h) Enveloping the insert, which has been pre-manufactured and therefore it is readily available to be integrated in the envelope for the final manufacturing steps with the pre-prepared panel system as shown in Figure 13:
   a. Same ceramic slurry can be used for connecting the insert to the panel system.
   b. Other joining method can also be used, such as a ceramic glue or a brazing technique using metallised surfaces on both ceramic structures
   c. At the TE, a special woven tissue feature can be integrated in order to ensure a more efficient/through going joining between the AF/SS and the AF/PS CMC panels (see Figure 13).
   d. The insert is a made of ceramic with a specific internal structure enabling an efficient cooling of the insert via air passing through the structure. This can be generated using a ceramic foam, but also using a more innovative system such as a lattice structure (i.e., "engineered porosity"). The insert is made in a way that it provides, in addition to the efficient heat exchange feature, a consequent thermal and mechanical resistance to the specific area of the component or component module.
i) Slurry infiltration in the tissue by, e.g., knife blade coating in the LE area (points A to B in Figures 13, 14).
j) Drying.
k) De-moulding in case a special mould was needed to maintain insert and CMC panels in right position.
l) Sintering the whole structure in order to finalise the component specific areas or component module.
m) Finishing, namely using of i) post-machine, and/or ii) surface smoothening/rework, and/or iii) coating application, and other arrangements, if needed.

Cooling air holes generation using pins can be added to the above manufacturing sequence if needed.

### Brief description of the drawings

The present invention is going now to be explained more closely by means of different embodiments and with reference to the attached drawings.
- Figure 1: shows various examples of panel arrangements, combination of standard CMC woven tissues with other panel types such as isolation panels (see also Fig.2) or cooling structure/features panels (see also Fig.3);
- Figure 2: shows a typical panel arrangement where an isolation panel is placed in-between two standard CMC panels. Additionally, the optional application of a ceramic coating on the external surface of the panel arrangement is also shown, here in the pictorial connection with Figure 1; for detailed description see Figure 8;
- Figure 3: shows a) an example of a woven ceramic tissue combining different ceramic fibre bundles forming a specific cooling architecture; b) an example of a ceramic tissue with pre-designed/integrated cooling holes features. These tissues are to be used for the formation of cooling structure/feature panels that will be brought in different arrangements with other panel systems as shown in Fig.1;
- Figure 4: shows some examples of panel combinations where, for example in d), 3 different panel systems (standard CMC panel, isolation panel and cooling structure/feature panel) are combined;
- Figure 5: shows same examples of panel combinations as Fig.4 where the next step of insertion of pins to enable the formation of cooling air holes w/o damaging the ceramic fibres of the different tissues has been carried out;
- Figure 6: same examples of panel combinations as Fig.4 in which the pins are removed leaving cooling holes and channels through the multiple layer system;
- Figure 7: shows a practical example of CMC panel with inserted pins;
- Figure 8: shows a structure of a typical panel arrangement where an isolation panel is placed in-between two standard CMC panels according to Figure 2; additionally, the optional application of a ceramic coating on the external surface of the panel arrangement is also shown
- Figure 9: shows various examples of combined fibres architectures, wherein the used fibres are distinctively shown, according to sub-figures a)-e);
- Figure 10A: shows a structure of a compounded panel with cooling channels in-between CMC skins;
- Figure 10B: shows a magnification of Figure 10A, namely a structure of a compounded panel with cooling channels in-between CMC skins;
- Figure 11: shows a panel structure using tissues with pre-build cooling holes, according to sub-figures a) and b);
- Figure 12: shows an undulated structure of a panel made of CMC, according to sub-figures a)-c); sub-figure b) shows the undulated structure attached to a standard CMC panel
- Figure 13: shows a flexible manufacturing concept with reinforcement inserts referring to a blade/vane airfoil, according to sub-figures a) and b);
- Figure 14: shows a concept of woven tissues to form a pre-joined Trailing Edge area in order to avoid the CMC at the TE area to rely only on gluing/brazing as joining technology

### Detailed description of exemplary embodiments of the invention

Figures of this description show various embodiment of single and/or multi-plies CMC panels provided for system arrangements. Fundamentally, the CMC panel can be designed with individualized fibre structure in accordance with the operational requirements. A certain percentage of the fibres may have differentiated diameters, which are intended to mainly carry the mechanical load (in the case of the larger diameters) and thermal stresses during the flow-applied operation.

Figure 4 shows various examples of panel combinations. Generally, panel means multi-plies of arranged or woven fibres tissues. Figure 4 a) shows a standard CMC panel, also called panel 1, using standard arranged and/or woven fibres tissues. Different layers in a multi-layered panel do not have necessarily the same fibre orientation or weaving architecture. The panel combination according to Figure 4 b), is putting together a standard CMC panel (made of one of multiple plies of a standard ceramic tissues) and a "cooling pattern" CMC panel (see also description under Figure 3) also called panel 2.

Fig.4c): a "cooling pattern" CMC panel placed in-between two standard CMC panels.

Fig.4d): same as Fig.4c), but with the addition of an "isolation" panel (so-called panel 3) at the bottom (in red). Further configurations of the various panels are shown in Figure 1. These are not the aim of exhaustive configurations.

Other combinations can be realised depending on the specific application. The layer-up order of the panels can also be different. The panels can be made of complex 3D geometries such as a gas turbine blade/vane airfoil (see the examples under Figure 1).

Figure 2 shows the structure of an "isolation panel". For detailed description see Figure 8.

The mentioned CMC zones 20, 40 can consist of a laminate structure, such that an appropriate bond between the single intermediate layers (different tissue plies) is achieved. Furthermore, the zones can be formed by a multiple sandwich structure. "Laminate structure" means the technique of manufacturing a material in multiple layers, so that the composite material achieves improved strength, stability, sound insulation, appearance or other properties from the use of differing materials. A laminate structure is usually permanently assembled by heat, pressure, welding, or adhesives

Moreover, the mentioned ceramic felt 30 between the CMC zones 20, 40, likewise build-up of 2D/3D tissue structure with thinner fibres, serves to fix the ceramic matrix to the overall fibre substructure. The fibres of the ceramic felt can be differently woven using the same or different materials, within the ceramic felt and on each side of the panels comprises both first and second fibre materials. Any stacking-sequence of different woven fibres within the thickness of the panel arrangement is also possible.

Figure 3 shows various arrangements of cooling architecture panels consisting of at least two embodiments: Figure 3a) shows a panel using combined fibres architectures for example a standard CMC woven tissue 50 in combination with carbon fibres 60. The other Figure 3b) shows a panel using tissues with pre-built cooling holes 70. A combination using fibres and tissues with pre-built cooling holes can be made.

Figures 5 a)-d) show a concept with pins 100, which are inserted through the various panels according to Figures 1 to 4 during the manufacturing process of a single panel or of panel combinations. The pins are positioned once the panel structure is built and are removed after the sintering step of the process. Number, size and puncture locations of the introduced pins are determined from case to case, particularly in connection with the cooling requirements of the single panel.

Figures 6 a)-d) show the mentioned panel arrangements by virtue of Figure 5, in which the pins are removed, thus the resulting channels constitute appropriate cooling holes.

Additionally, the cooling holes being actively connected to the structured cooling or chaotic running channels within the panel body are designated for convective and/or impingement and/or effusion cooling effects. Furthermore, in some specific configurations or using a specific type of pins, the introduced pins (see Figure 5, item 100) through the woven structure can be integrally or partially eliminated by using a thermal and/o chemical treatment.

One additional point to mention is the fact that the pins can be inserted through the full thickness of a single panel or of a panel combination. However, it can also be the case that the pins are inserted only partially through the thickness of the panel combination, not passing through the whole thickness.

Figure 7 shows an example of manufacturing with metallic pins 110 and inserted in the CMC tissue 120 and fixed on the underneath mould before the drying operation. Such an implementation can be made in every above identified panels 1, 2 and 3 (see Figure 5).

Figure 8 shows in an enlarged scale the same arrangement as already shown under Figure 2 and it is equivalent to the panel 3 under Figure 4 c). Of course, all other illustrated panels under Figure 4 or 5 can also be made.

Figure 8 shows the structure of an "isolation panel" comprises, as viewed from top to bottom, of a coating zone 10, a CMC zone 20 consisting of one or more plies, a centrally (intermediate) arranged ceramic felt 30, which is or not impregnated with ceramic slurry matrix system, and finally a further CMC zone 40. Depending on the needs, a coating (zone 10) can be added by various different processes, for example thermal spraying, dipping, CVD, etc., on top of the internal or external surface of the panel.

Figures 9 a)-e) show various tissue architectures using combined fibres architectures. The first ceramic fibres 50 (white) are used in the standard CMC woven tissue. Complementary fibres 60 (black) consist of carbon fibres. The "black" fibres are "sacrificial fibres that will burn out during the sintering process leaving a negative architecture forming the cooling structure. Both fibres can be differently woven using the same or different materials. The resulting architecture having a rectangular or quasi-rectangular weaving, or an oblique or quasi-oblique, or non-rectangular angulation weaving. Furthermore, the architecture can be designated as a sinusoidal or quasi-sinusoidal interdigitated weaving. Any stacking-sequence of different woven fibres within the thickness of the panel arrangement is also possible. Figure 9 a)-e) reflects the different weaving structure.

A practical result of a manufacturing according to Figure 9 is shown in Figure 10 A and B. In particular, Figures 10 A and B show the centrally in-between disposed cooling channel structure 130.

Figure 11 a) corresponds to Figure 3 b) and Figure 11 b) This is an example of pre-built CAH 70 in a ceramic tissue which is then integrated in the standard CMC panel forming an airfoil with precisely positioned CAHs 70.
In this context using a special fabric (see definition under "summery of the invention") where the cooling structure (CAHs) is directly woven in within a ceramic fabric and applying as a layer. The performing are as follows:
1) Cut a stripe or pre-defined geometry tissue from a special fabric.
2) Integrated stripe or pre-defined geometry tissue into ceramic fabric, e.g., by cutting out the corresponding geometry from the ceramic fabric.
Referring to Figures 11b) one layer with a special woven forming the cooling structure (CAHs) provided as a layer.

Figure 12 a)-c) shows an undulated structure 80, 90 of a main panel or intermediate layer, which is made of CMC. The undulated structure can play the role of "bumper" and "CTE mismatch compensator". The final aim is to combine an undulated structure made of CMC to a single or multiple panel structure obtained from various operations. The undulated structure 80, 90 is manufactured separately using the same manufacturing route as the standard CMC tissues and an appropriated mould including the drying and de-moulding steps. The structure is slipped in the internal cavity of the multiple panel structure obtained from various operations. Both structures can be glued using the same ceramic slurry used for the infiltration of the ceramic tissues, or only punctually bound in order to allow a larger lateral movement/expansion of the "undulated" structure. The binding between both structures, namely panel/undulated structure, can also be made by a different joining method, such as a ceramic glue or a brazing technique using metallised surfaces on both ceramic structures

Figure 13 shows a flexible manufacturing concept with reinforcement inserts referring to a blade/vane airfoil, according to sub-figures a) and b).

Figure 14 shows a concept of CMC woven to join the Trailing Edge (TE) area, which is in detail described on pages 13-15 of this disclosure. Two ceramic tissues were interwoven at one extremity in order to enable a connection at, e.g., the TE, which is not only relying on gluing/brazing methods.

## Claims

1. Method of manufacturing of an isolation panel for applying on a component to adapt the final component to a specific isolation function, which panel is manufactured by the following steps:
a) Cutting of a desized 2D ceramic into a tissue of the right size and shape for the application;
b) Slurry infiltration in the tissue by at least one knife blade coating method;
c) Laminating on mould of a single layer or of a multi-layer or of a multi-layer initial according to the panel with slurry impregnation after each layer;
d) Laminating on top of multi-layer according to the a panel 1 consisting of a single layer or of a multi-layer or of a multi-layer initial according to one or more of the steps a) to c);
e) Drying;
f) De-moulding;
g) Sintering the whole structure in one or more steps in order to finalise the component specific areas or component module;
h) Finishing, namely using of i) post-machine, and/or ii) surface smoothening/rework, and/or iii) coating application, and/or other procedures.

2. The method according to claim 1, **characterised in that** a slurry infiltration in the tissue by a knife blade coating method after each single layer.

3. The method according to the claim 1, **characterised in that** adding on top of the first panel a second, third, etc., panel of same or different functions.

4. The method according to claim 1, **characterised in that** the laminating on mould of a single layer or of a multi-layer or of a multi-layer initial panel comprising at least one of the following configuration namely: i) an application of one to n-layers of standard ceramic tissue with arranged fibres, or un-directionally arranged (UD), or woven fibres; and ii) different layers in the multi-layered panel do not have necessarily to have a same fibre orientation or weaving architecture.

5. The method according to claim 1, **characterised in that** the laminating on top of multi-layer comprising at least one of the following steps, namely i) an application of one to n-layers of ceramic felt, and ii) a slurry infiltration in the tissue, namely only outer surfaces of the tissue in order to bind it to the CMC multiplies panels, or fully impregnated by knife blade coating, after each single layer.

6. The method according to claim 1, **characterised in that** each outer surfaces of the layers is partially or integrally impregnated in order to enable a binding to the other layers

7. The method according to one of the claim 1 to 6, **characterised in that** the ceramic felt is partially or integrally impregnated.

8. The method according to claim 1, **characterised in that** a pin application with a plurality of pins in order to generate straight cooling paths through a part of the thickness or through the full thickness of the multiple panel structure comprising at least one of the following steps, namely pins can be i) permanent metallic pins with a ceramic coating layer to avoid attachment of matrix to the pin and too strong oxidation of the pin during sintering; and ii) permanent ceramic pins that can be easily removed after sintering; and iii) pins that will be eliminated during the sintering process via a heat treatment leaving the holes structure intact.

9. The method according to claim 8, **characterised in that** the eliminated pins are made of a carbon material.

10. The method according to one of the claims 1 to 9, **characterised in that** the pins are applied by sliding them through a part of thickness or through the whole thickness of the multiple panel structure,
in order to facilitate the positioning of the pins, the mould underneath can be provided with positioning holes in which the pins are fit into with the appropriated position and angle, and wherein
the pins are inserted in-between the tissue fibre bundles in order to avoid any damages of the ceramic fibres during the processing and later removal of the pins.

11. Method of manufacturing of a structured cooling panel for applying on a component to adapt the final component to a specific cooling function, which is manufactured by the following operations:
a) Cutting of a desized 2D ceramic into a tissue in the right size and shape for the application;
b) Slurry infiltration in the tissue by at least one knife blade coating method;
c) Laminating on mould of a single layer or of a multi-layer according to one of the panel systems, with slurry impregnation after each layer;
d) Laminating on top and/or on mould of a single or multi-layer system;
e) Drying;
f) De-moulding;
g) Sintering the whole structure in one or more steps in order to finalise the component specific areas or component module;
h) Finishing, namely using of i) post-machine, and/or ii) surface smoothening/rework, and/or iii) coating application, and/or other procedures.

12. The method according to claim 11, **characterised in that** the laminating on mould of a single layer or of a multi-layer according to one of the panel systems comprising at least one of the following steps, namely i) an application of one to n-layers of ceramic fabrics with combined fibre architecture; ii) different layers in the multi-layered panel having a same or different cooling path architecture;

13. The method according to one of the claims 11, 12, **characterised in that** adding slurry infiltration in the tissue by a knife blade coating method, after each single layer.

14. The method according to claim 11, **characterised in that** the laminating on top of multi-layer comprising at least one of the following steps, namely i) an application of one to n-layers of standard ceramic tissue with arranged fibres, or un-directionally arranged (UD), or woven fibres; ii) different layers in the multi-layered panel having a same or different fibre orientation or weaving architecture; iii) slurry infiltration in the tissue by a knife blade coating method, after each single layer.

15. The method according to claim 11, **characterised in that** a pin application with a plurality of pins in order to generate straight cooling paths referring to cooling air holes, through a part of the thickness or through the full thickness of the multiple panel structure comprising at least one of the following steps, namely pins can be: i) metallic pins with a ceramic layer on top to avoid attachment of matrix to the pin and too strong oxidation of the pin during sintering; ii) permanent ceramic pins, that can be easily removed after sintering; iii) pin that will be eliminated during the sintering process via a heat treatment.

16. The method according to claim 15, **characterised in that** the eliminated pins are made of a carbon material.

17. The method according to one of the claims 11 to 16, **characterised in that** the pins are applied by sliding them through a part of thickness or through the whole thickness of the multiple panel structure, wherein in order to facilitate the positioning of the pins, the mould underneath can be provided with positioning hole in which the pins are fit into with the appropriated position and angle.

18. The method according to one of the claims 11 to 17, **characterised in that** the pins are inserted in-between the tissue fibre bundles in order to avoid any damages of the ceramic fibres during the processing and later removal of the pins.

19. The method according to one of the claims 11 to 18, **characterised in that** at least one part of the fibres will burn out during the sintering process leaving a negative architecture forming the cooling structure.

20. Method of manufacturing of a panel using tissues with pre-built cooling structure/CAHs for applying on a component to adapt the final component to a specific function comprising the following operations:
a) Cutting of a desized 2D ceramic tissue in the right size and shape for the application;
b) Slurry infiltration in the tissue by at least one knife blade coating method;
c) Laminating on mould of a single layer or of a multi-layer according to at least one panel as member of the combined panel structures, comprising at least one of the following steps: i) an application of one to n-layers of woven tissues with integrated cooling holes structure; ii) slurry infiltration in the tissue by at least one knife blade coating, after each single layer.
d) Drying;
e) De-moulding;
f) Sintering the whole structure in one step in order to finalise the component specific areas or component module;
g) Finishing, namely using of i) post-machine, and/or ii) surface smoothening/rework, and/or iii) coating application, and/or other procedures

21. The method according to claim 20, **characterised in that** the laminating on top of a multi-layer according to at least of one panel system comprising at least one of the following steps: i) an application of one to n-layers of standard ceramic tissue with arranged fibres, or un-directionally arranged (UD), or woven fibres); ii) different layers in the multi-layered panel having same or different fibre orientations or weaving architectures; iii) slurry infiltration in the tissue by knife blade coating, after each single layer.

22. The method according to claim 20, **characterised in that** a pin application with a plurality of pins in order to generate straight cooling paths referring to cooling air holes, through a part of the thickness or through the full thickness of the multiple panel structure comprising at least one of the following steps, namely pins can be: i) metallic pins with a ceramic layer on top to avoid attachment of matrix to the pin and too strong oxidation of the pin during sintering; ii) permanent ceramic pins, that can be easily removed after sintering; iii) pins that will be eliminated during the sintering process via a heat treatment.

23. The method according to claim 22, **characterised in that** the eliminated pins are made of a carbon material.

24. The method according to one of the claims 20 to 23, **characterised in that** the pins are applied by sliding them through a part of thickness or through the whole thickness of the multiple panel structure, wherein in order to facilitate the positioning of the pins, the mould underneath can be provided with positioning hole in which the pins are fit into with the appropriated position and angle.

25. The method according to one of the claims 20 to 24, **characterised in that** the pins are inserted in-between the tissue fibre bundles in order to avoid any damages of the ceramic fibres during the processing and later removal of the pins.

26. The method according to one of the claims 20 to 25, **characterised in that** at least one part of the fibres will burn out during the sintering process leaving a negative architecture forming the cooling structure.

27. Method of manufacturing of a panel with an intermediate layer for applying on a component to adapt the final component to a specific function, comprising the following operations:
a) Cutting of a desized 2D ceramic tissue in the right size and shape for the application;
b) Slurry infiltration in the tissue by at least one knife blade coating method;
c) Laminating on mould of a single layer or of a multi-layer panel system;
d) Laminating on top of a single layer or of a multi-layer panel system;
e) Repeating steps c) and d) until the targeted CMC structure is reached;
f) Drying;
g) De-moulding;
h) Combining a supplemental panel structure made of CMC to the multiple panel structure obtained from operations a) to g);
i) Sintering the whole structure in one step in order to finalise the component specific areas or component module;
j) Finishing, namely using of i) post-machine, and/or ii) surface smoothening/rework, and/or iii) coating application, and/or other procedures.

28. The method according to claim 27, **characterised in that** the supplemental panel structure comprising one or more of following manufacturing steps: i) the structure is manufactured separately using the same manufacturing route as the standard CMC tissues and an appropriated mould including the drying and de-moulding steps; ii) the structure is slipped in the internal cavity of the multiple panel structure obtained from operations a) to g); iii) both structures are glued using the same ceramic slurry used for the infiltration of the ceramic tissues, or only punctually bound in order to allow a larger lateral movement/expansion of the supplemental structure; iv) the binding between both structures is made by a different joining method, such as a ceramic glue or a brazing technique using metallised surfaces on both ceramic structures.

29. The method according to claim 28, **characterised in that** a subsequent drying operation is made, when step iii) is carried out.

30. The method according to one of the claims 27 to 29, **characterised in that** the supplemental panel structure consist of an undulated or quasi-undulated configuration.

31. Method of manufacturing of at least one reinforcement insert and insert integration referring to a blade/vane airfoil comprising the following steps:
a) Cutting of a desized 2D ceramic tissue in the right size and shape for the application.
b) Slurry infiltration in the tissue by at least one knife blade coating method in at least one of the operational areas;
c) Laminating on mould of a multi-layer system, with slurry infiltration after each layer in the areas not in contact with the insert;
d) The leading edge and/or the trailing edge areas of an airfoil remains thinner taking into account the thickness of the insert;
e) Repeating operations c) and d) until the targeted CMC structure is reached.
f) Drying.
g) De-moulding.
h) Enveloping the insert with the pre-prepared panel system comprising the following steps:
i) Same ceramic slurry can be used for connecting the insert to the panel system;
ii) Using a joining method such as a ceramic glue or a brazing technique using metallised surfaces on both ceramic structures;
iii) At the trailing edge of the airfoil, a special woven tissue feature is integrated in order to ensure an interwoven joining area between the operational areas of CMC panels;
iv) The insert is made of ceramic material with a specific internal structure enabling an efficient cooling of the insert via air passing through the structure by using a ceramic foam- or a lattice structure with an engineered porosity;
v) The insert is made in a way that it provides, in addition to the efficient heat exchange feature, a consequent thermal and mechanical resistance to the specific area of the component or component module.
i) Slurry infiltration in the tissue by at least one knife blade coating method in the leading edge area;
j) Drying;
k) De-moulding in case a special mould was needed to maintain insert and CMC panels in right position;
l) Sintering the whole structure in order to finalise the component specific areas or component module;
m) Finishing, namely using of i) post-machine, and/or ii) surface smoothening/rework, and/or iii) coating application, and/or other procedures, if needed.

32. The method according to claim 31, **characterised in that** laminating another panel system on top of a panel system consisting of a single or a multi-layer system in the operational areas of the panels.

33. Using of a single panel or a combined panel structure in one or more of the claims 1 to 32, **characterised in that** an isolation panel (panel 1) is manufactured according to the one or more of the claims 1 to 10.

34. Using of a single panel or a combined panel structure in one or more of the claims 1 to 32, **characterised in that** a cooling structure panel (panel 2) is manufactured according to one or more of the claims 11 to 19.

35. Cooling structure panel according to claim 34, **characterised in that** the panel 2 is manufactured using combined fibres architecture and/or ceramic fibres with carbon fibres and/or tissue with pre-built cooling air holes (CAHs).

36. Using of a single panel or a combined panel structure in one or more of the claims 1 to 32, **characterised in that** the cooling structure (CAHs) is manufactured using pins in combination with at least one of the different panel structures, namely panel 1 (isolation), panel 2 (cooling structure), panel 3 (ceramic felt) or in any combination each other.
